# EUROPEAN PATENT APPLICATION

(11) **EP 2 642 104 A2**
(43) Date of publication of application: **25.09.2013**
(21) Application number: 13461509.5
(22) Date of filing: 04.03.2013
(51) Int. Cl.: F02D 41/00, F02D 41/14, F02D 41/30, F02D 35/02

(54) **Optimization of dual-fuel feeding in electronic controlled four-stroke piston compression ignited engines with gasous fuels**

(30) Priority: 06.03.2012 PL 39833412
(71) Applicant: Sarre, Piotr, 44-100 Gliwice (PL)
(72) Inventor: Sarre, Sebastian, 44-100 Gliwice (PL)
(74) Representative: Lampart, Jerzy

(57) **Abstract**

Realization of dual-powering four-stroke self-ignited engine, using alternative gaseous fuel, applied to air inlet system, charcteristic of alternative gaseous fuel applied in gaseous or liquid state to each cylinder's inlet duct independently, in doses identical or various for any individual cylinder, via individual injectors (10a, 10b, 10c...) driven by microprocessor programmable controller (2) preparing alternative gaseous fuel dose individually for given work cycle of given cylinder in given engine, in the way ensuring controllable alternative gaseous fuel and inducted air stream stratifying ratio, and knocking combustion detection (17) caused by alternative gaseous fuel overdosing is being made for each work cycle of each cylinder of given engine separately, and optimal energy value of both fuels summary dose for given work cycle of given engine's each cylinder is being stated by comparative analysis of crankshaft rotational speed unevenness in the ambit of angular crankshaft position ranges related to combustion process in particular cylinders of given engine, and the dose of basic diesel fuel is being reduced identically for all cylinders, or in various degrees for each cylinder, to keep unchanged or increased a combustion duration time of each cylinder, falling on each of his work cycles, comparing to identical conditions with basic powering only.

## Description

Method utilises simultaneously used basic and alternative fuels, where amount of alternative gaseous fuel which may be liquid petroleum gas lpg, compressed natural gas CNG, liquid natural gas LNG, or hydrogen is computed individually for each cylinder of engine, and its quantity is related to proportional reduction of basic diesel fuel amount, when compared to monofuel feeding with diesel fuel only. Computed amounts of alternative gaseous fuel are being injected sequentially for each cylinder of given engine in liquid or gaseous state, where optimization of fueling bases on stratifying the mixture of inducted air and injected gas, monitoring of angular accelerations of crankshaft and knocking detection, which facilitates realization of adaptive, additive/subtractive corrections of injected alternative fuel amount, independently for each cylinder.

### Existent, similar solutions:

Dual-fuel feeding of compression ignited engines, is proceeded by adding alternative gaseous fuel into base fuel-air mixture, what results in optimization of diesel fuel combusting and gaining additional energy from gaseous fuel in thermodynamic engine cycle. Better combusted liquid diesel fuel, and partial replacement of it with much cheaper gaseous fuel, gives noticeable increase of economic parameters, and simultaneously - improvement of ecological parameters due to reduced emission of NO₍ₓ₎, radical reduction of particulate matter (pm10) in exhaust gases, and reduced emission of carbon oxide (CO) and carbon dioxide (CO₂). Overall influences of dual - fuel feeding let engines meet more restrictive emission regulations, what enables to make road transport cheaper by costs invovled in level of emissions. It is recommended then, to aim at maximising of percentage quota of alternative gaseous fuel in overall dual-fuel charges injected into engine.

There are known solutions - among others from patents [GB 2437098]; [US 6,694,242]; inventions from patent aplications [PL 378146] and [PL 388684] - systems in which internal combustion, compression ignited piston engine is powered with liquid diesel fuel, and gaseous fuel, where basic diesel fuel is being injected into each cylinder through stock, dedicated injector, and alternative gaseous fuel is being charged into air inlet system, from where, after mixing up with air, is inducted into combustion chambers of engine.

There are known methods - among others from patent [US 7,387,091] - where knock sensor is used to detect excessive noise from knock combustion in dual-fuel powered diesel engine, due to overcome of critical quota of gaseous fuel, and to realise feedback reducing of gas dosing to eliminate damaging process of knock combustion of fuel-air mixture in cylinders.

There are known solutions - among others from patent ITMI20090968 (WO2010139572) - where computed portion of basic liquid diesel fuel, being injected by electronically controlled injector is reduced, as a process realised by additional electronic controller, being able to cut out a final part of steering signal in its main part (with exception of unchanged pilot injections - known as *pre-injections*). This process results in reducing a charge of basic fuel, when compared to monofuel feeding, what enables integration of overall needed portion of fuel and gas, and finally - gives a possibility to produce anticipated level of engine power, as for incoming parameters and dynamic state of engine (rotational speed, and load).

Essiential feature of existing solutions in dual fueling of compression ignited engines - is limited precision of dosing the alternative fuel, due to method being in common usage - dosing a gaseous fuel into the air inlet system - into the common point for all cylinders of engine - in crucial geometrical distance from combustion chambers. That methodology leads to crucial lag in engine reaction for changing charges of alternative fuel, which determines unability of real-time feedbacking in regulation of dosing gaseous fuel in case of existing negative engine behaviours due to it's overdose in overall dual-fuel feeding. That situation seriously lessens possibilities, potentially given by dual-fuel feeding of diesel.

Another common, essential feature of solutions described above is tendence to cause detonations in combustion process, growing up together with increasing percentage quota of gaseous fuel in overall dual-fuel charges. Such tendency causes the need of reduction in dosing a gas to zero state for all cylinders, like in patent [US 7,387,091], and next - after the knocking is stopped - let gaseous fuel to be resumed in reduced charges.

Poor effectivity must be claimed when assessing knock detection caused by overdosing gas in dual fueling, when average noise level from continuous sensor reading is used as indicator of knock processes.

Other solution is a method of reducing the dose of single injection of basic diesel fuel, like in patent [ITMI20090968 (WO2010139572)], based on shortening an electric signal generated to drive diesel fuel injection (the injection is stopped earlier). In compression ignited engine, beginning of combustion process is initiated by beginning of injection phase, and propagation of flame within combustion chamber expands on surface of sprayed swirling cloud of injected diesel fuel. Injection course in time of combustion stroke is proportional to level of combustion duration, which are combined to gain best possible indicated mean effective pressure, giving optimal torque of engine. Leaving overall amount of both fuels in dual-fuel mode at the same level as their equivalent in monofuel feeding, with simultaneously shortened process of basic fuel injection leads to shortening of combustion duration process in single cycle powered in dual-fuel mode, and - as a result - faster growth of burning gas pressure in the cylinder, up to levels increasing a risk of detonations within a volume of air - gaseous mixture in the part of combustion chamber, which is not actually in flames, coming from sprayed diesel fuel. Imperfect is also (in the sense of maximization of gas percentage in overall amount of fuels being injected) the way of dual - fuel feeding of compressed ignited engines, based on single-point gas injection to air inlet system (most often before turbocompressor, if exist), because of total homogenization of air-gas mixture, before it is in engine cylinders.

### Description:

The essence of invention is the way of dosing the AF to individual cylinders of electronically controlled, four - stroke compression ignited (Diesel) engines.This solution gives the opportunity of continous, real-time optimizing the gas portions directed to every individual cylinder, for each working cycle of them, what can be done in any dynamic state of engine. This allows to increase the percentage volume of alternative fuel in comparsion to existing dual - fuel systems, and at the same time keeps unchanged a durability of engine and it's operation safety. Invention enables also advantageous possibility for some alternative fuels, of injecting gas directly in the liquid state.

According to assumptions of the invention, realization consists also in usage of electronic controller, programmed to make as following: Gas is being driven from tank, through electrovalve, gas filter (for liquid state only in case of gas storage in liquid state phase), pressure-reducing unit, which also fulfills a purpose of phase transition - liquid gas to gaseous phase (if using such), gaseous state filter, gas pressure sensor, gas temperature sensor, to gas injector. Controller identifies engine's cylinders firing sequence, and makes a precise monitoring of crankshaft's angular position, based on introduced input impulses, coming from attached or factory original (OEM) crankshaft position sensor collaborating with multitooth trigger wheel, camshaft position sensor identifying at least one characteristic angular camshaft position, steering impulses for basic diesel fuel injectors coming from the original engine's electronic controller, and signals from at least one knock sensor. In order to facilitate, it is allowed to introduce impulses from other sensors to controller, what is not essential for the invention to work properly but can make described system co - operate with the original engine supply steering system better. Those are: accelerator pedal position sensor, mass/volume air flow meter, inlet manifold air pressure sensor, basic diesel fuel rail pressure sensor, or air temperature sensor. For some of the mentioned sensors there is a possibility of former modification of red signals values by the controller before being introduced to the controller.

Role of such modifications is to compensate the effects caused by curtailment of basic diesel fuel usage, with engine kinetic parameters unchanged.

The logical structure described above, enables realization of invention's assumptions described below:
- Creating and regulation of stratifying degree of air and gas streams mixture, as a result of individual gas injector usage for each cylinder of an engine, making it possible thanks to electronically computed and batched fuel charges for each work cycle of given engine's cylinder. It is being done by injectors - dual-state electronically controlled electrical valves, with a zero flow normally - placed possibly close to the inlet valve, to get possibly the shortest common way of batched gas dose and inducted air to the given cylinder in his given work cycle. According to the invention's assumptions, the invention gives a possibility of free injection time phase shifting in relation to inlet valve opening time phase in any engine cycle. By the possibility of changing the time period of staying in common volume of inducted air dose and batched gas dose for the same cycle, occurs the scope for regulation of air and gas streams stratifying ratio.
   Consequently, the mixture may get possibly most hardy for detonation type combustion.
   The invention enables then significant percentage increase of introduced gas in comparsion to exisiting dual-fuel systems, with detonation risk unchanged or reduced, what makes the engine exploitation more ecologic and economic.
- According to invention's assumptions - using microprocessor programmable controller computed, combined dose value of dual-fuel feeding, which is equivalent to basic dose of monofuel feeding, which assumes the specific way of basic fuel charge reduction, with joint (overall) dose complemented simultaneously with help of gas dose. Basic diesel fuel dose reduction is based on controller generated basic fuel powered first impulse, which controls basic fuel injector, by alternative fuel feeding controller, and on base of that impulse - generating the derivate signal, which takes control on basic fuel injector, mapping unchangeably at least one, known as pilotage (firing initiating), basic fuel dose injection, and substituting at least one basic diesel fuel uninterrupted dose of the main injection phase with bistate signal with regulated pulse width of at least one low state interval. This facilitates original basic fuel dose reduction, with keeping overall original length and injection phase orientation, towards crankshaft's angular position.

The process connected with basic fuel dose modification is fulfilling overall dose with alternative gas fuel by alternative fuel feeding controller, according to earlier programmed doses. Doses are continously adjusted by adaptive algorithm, basing on given dual - fuel feeding cylinder firing energy measurement - compared to that or other cylinder's firing energy, working on basic fuel only. During the process, crankshaft's rotational speed unevenness measurement taken in angular range equals given dual - feeding cylinder's power stroke. Measurement result is being pertained to results of analogical measurement done at the same time in cylinder powered solely by basic fuel (absolute adaptation), and to the other cylinders - powered by both fuels mixture (differential adaptation).

Gas feeding controller stores the adaptation values in his memory. They are to pinpoint quantity reliances of both fuels to facilitate their dynamic proportions change, with total energy value of both fuels dose kept unchanged, comapring to basic fuel dose in a given dynamic state of engine - stated by the original engine controller.
- Using microprocessor-driven, advanced process of knocking burning detection for each cylinder in combination with introducing fuels realization, as described above. Tactics as per the invention facilitates - for programmed gas fuel does and given dynamic state of engine - as well reductive correction of the gas dose (subtractive adaptation), to eliminate detonation combustion, as for reinforcing correction (additive adaptation), to maximize gas dose for given cylinder, in feedback with signals from knocking combustion detection system. Correction values derived from those adaptation manners are stored in each cylinder's gas feeding controller and used in another cycles to formulate maximum gas doses. Gas doses differences formulated and considered in relation to programmed basic dose, are related with basic fuel doses, in any case they are to keep constant total value of both fuels energy, in the ambit of dose for given engine cylinder's one work cycle, being an equivalent for formulated by an original engine controller basic fuel dose at engine given dynamic state.
- Using microprocessor-driven detection of knock combustion individually for each cylinder, thus fuels injecting, as per the invention. By crankshaft and camshaft position sensors' signals, or crankshaft position sensor and diesel fuel injector controlling signals, the gas injection controller specifies real-time exact crankshaft angular position, and detects knocking combustion sensor(s) signal, value of which read in time widow discernible in crankshaft angle of rotation, at a period of combusting process in given cylinder - compared to signal level in the same time widow, measured during monofuel feeding [base liquid fuel ] used as reference, facilitates precise detection of increased engine noise, as the result of uncontrolled increase of acoustic pressure, being an effect of detonation combustion in the cylinder, as a result of maximum gas quantity overdose for given cylinder momentary conditions of operation. Proceeding as per the invention facilitates - in comparison to programmed gas fuel dose and given engine dynamic state - as well reductive correction of given gas dose (subtractive adaptation) to eliminate detonation combustion, as increasing correction (additive adaptation), to maximize gas dose for given cylinder, in feedbacks from knocking combustion detection system. Correction values derived from those adaptation manners are stored in gas feeding controller's memory for each cylinder separately and used in another cycles to formulate maximum gas doses. Gas doses differences formulated and considered in relation to programmed basic dose, are related with basic fuel doses, in any case they are to keep constant total value of both fuels energy, in the ambit of every single dose for given engine cylinder's single work cycle, being an equivalent for formulated basic fuel dose at engine given dynamic state, computed by an original engine controller.
Alternative fuel charges regulation, constructed that way, in association with described feeding attributes, facilitates real time corrections of gas contribution in overall fuel injected amount, which are able to create adaptative data, which facilitate keeping maximum, engine-safe, gas dosing amount. As per the invention, sensors and algorithmization of their usage gives an innovative, not obvious in comparison to the nowadays state of technical knowledge, which enables making dual-powering, four-stroke, self-ignited engines exploitation more economic, used especially for automotive vehicles of all kinds, in which reduction of liquid basic fuel usage decreases up to 70%.

### Patent claims:

**1.** Realization of dual-powering four-stroke self-ignited engine, using alternative gaseous fuel, applied to air inlet system, **charcteristic of** alternative gaseous fuel applied in gaseous or liquid state to each cylinder's inlet duct independently, in doses identical or various for any individual cylinder, via individual injectors (10a, 10b, 10c...) driven by microprocessor programmable controller (2) preparing alternative gaseous fuel dose individually for given work cycle of

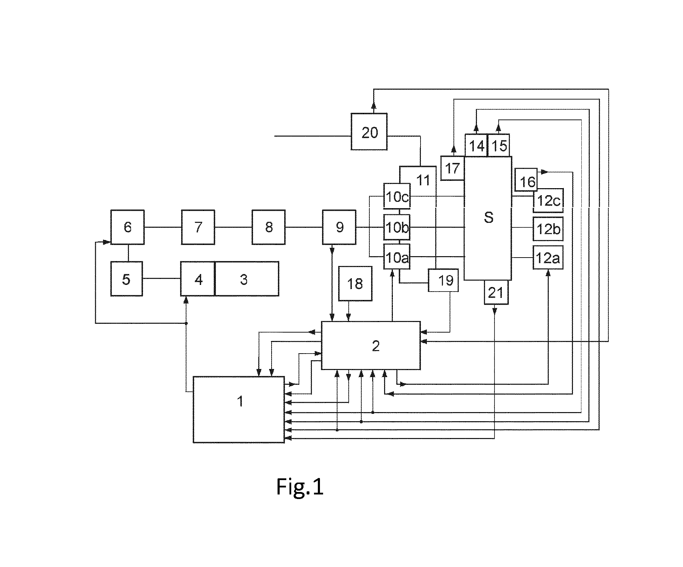

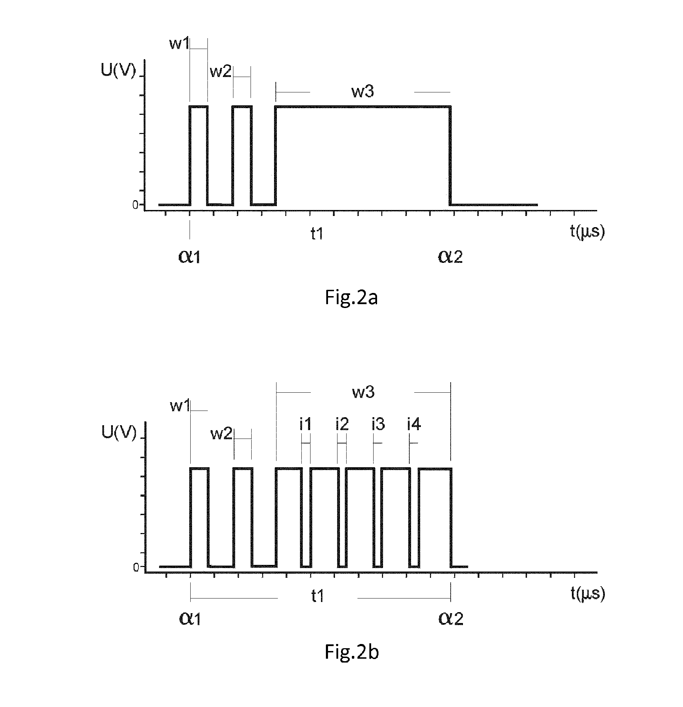

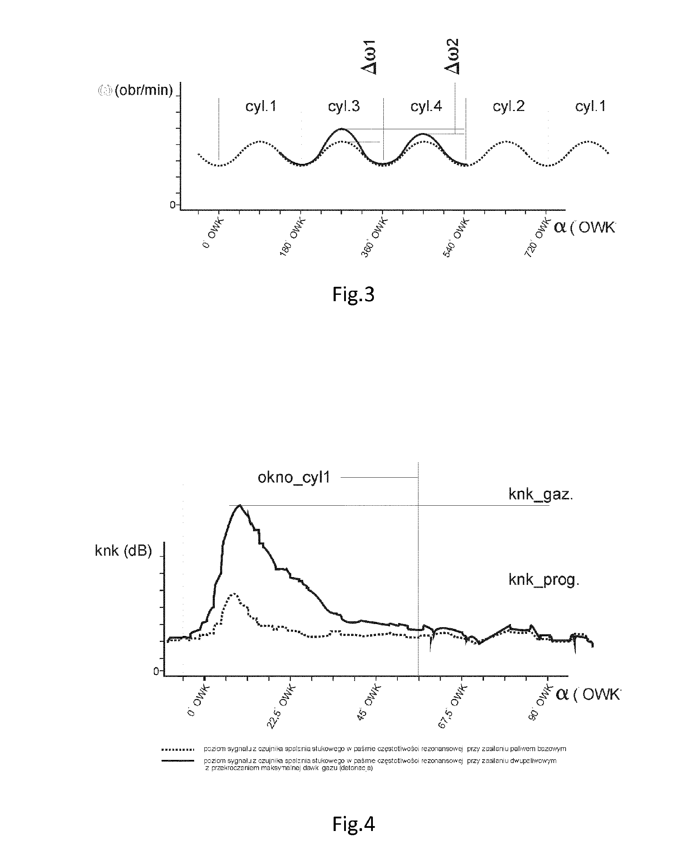

## Claims

1. Realization of dual-powering four-stroke self-ignited engine, using alternative gaseous fuel, applied to air inlet system, **charcteristic of** alternative gaseous fuel applied in gaseous or liquid state to each cylinder's inlet duct independently, in doses identical or various for any individual cylinder, via individual injectors (10a, 10b, 10c...) driven by microprocessor programmable controller (2) preparing alternative gaseous fuel dose individually for given work cycle of given cylinder in given engine, in the way ensuring controllable alternative gaseous fuel and inducted air stream stratifying ratio, and knocking combustion detection (17) caused by alternative gaseous fuel overdosing is being made for each work cycle of each cylinder of given engine separately, and optimal energy value of both fuels summary dose for given work cycle of given engine's each cylinder is being stated by comparative analysis of crankshaft rotational speed unevenness in the ambit of angular crankshaft position ranges related to combustion process in particular cylinders of given engine, and the dose of basic diesel fuel is being reduced identically for all cylinders, or in various degrees for each cylinder, to keep unchanged or increased a combustion duration time of each cylinder, falling on each of his work cycles, comparing to identical conditions with basic powering only.

2. Realization of the manner claimed in point 1, characteristic of rising up a resistance to knocking type combustion of alternative fuel and air mixture, by stratifying of injected alternative gaseous fuel and air streams in a given cylinder working cycle with adjustable stratifying degree, in which the regulation of stratifying ratio is being done by arbitrary change of time phase corelation between steering impulse releasing fuel gas injection, and opening of inlet valve in a given cylinder, what effects in a change of mixing time of air and gaseous fuel streams dedicated for single work cycle of a given engine, thereby various homogenization level of the mixture.

3. Realization of the manner claimed in point 1, where alternative gaseous fuel dose amount is stored in gas injection controller's (2) memory of which structure facilitates saving at least one value of it, or advantageously various values for different dynamic states of engine, expressed as kind of table of two functions - engine load and engine rotational speed.

4. Realization of the manner claimed in point 1, where computing of summary proper charge of both fuels with demanded features, individually for given cylinder's work cycle, is **characteristic of** adding reduced amount of base fuel to maximum possible dose of alternative gaseous fuel certain for given dynamic state of given cylinder, by monitoring crankshaft rotational speed unevenness, made by combusting events in individual cylinders of a given engine, determining combustion energy of each cylinder power stroke, then reference analysis of combustion energy of dual-fuel powering cylinder and combustion energy of the cylinder powered by unmodified basic diesel fuel is being done, and decreased basic fuel dose is specified to make a difference (Δω**1**) between crankshaft rotational speed unevenness taking place on ignition in dual-fuel fed cylinder and caused by basic fuel fed goes to zero, and the process realization is being done on the stage of initial dual - feeding system calibration, individually for each cylinder.

5. Realization of the manner claimed in point 1, where total charge construction of both fuels with demanded features individually for given cylinder's work cycle, is **characteristic of** decreased basic diesel fuel dose added to maximum alternative gaseous fuel dose certain for given dynamic state of given cylinder, where selected dose is computed by monitoring crankshaft rotational speed unevenness, made by combustions in each cylinder of a given engine separately, and determining combustion energy amount of each cylinder, then doing reference analysis of it, in dual-fuel fed cylinder (dual-fuel regulated in a given moment), and combustion energy of another dual-fuel fed cylinders, and decreased basic fuel dose is specified in a way to difference (Δω**2**) between crankshaft rotational speed unevenness falling on regulated cylinder power stroke and crankshaft rotational speed unevenness falling on other dual-fuel fed cylinder power stroke goes to zero, and the process realization is being done in real-time, during continous engine work with dual-fuel feeding, individually for each cylinder.

6. Realization of the manner claimed in point 4, where maximum possible amount of basic diesel fuel charge, formulated during system calibration as per the innovation, are stored in controller's (2) memory, of which structure facilitates saving at least one of its values - individually for each cylinder - or various values for different dynamic states of engine, expressed as function of two variables table - engine load and rotational speed.

7. Realization of the manner claimed in points 4 and 5, where construction of reduced basic diesel fuel injection controller impulse, is characteristic of being done by interception by controller (2) of original, basic diesel fuel injection controlling impulse, realized by injectors (12a, 12b, 12c...), sended by an original engine feeding controller (1), the impulse duration (t1) measuring, basing on that, constructing secondary bistate impulse, containing identical as in the first signal part with at least one basic diesel fuel pilotage signal (w1), and part with main basic diesel fuel charge, in which basic diesel fuel amount reduction is being realized by substitute in the ambit of continuous signal (w3) with interrupted signal (w4), containing at least one low state (i1), starting and finishing on high state, to keep identical work cycle original total duration time (t1) in given cylinder's working cycle, and to keep combustion duration in a given cylinder given work cycle, on optimal level.

8. Realization of the manner claimed in point 1 of detection of detonation type combustion in a given cylinder of a given dual - fuel fed engine, caused by transgression a maximum alternative gaseous fuel dose for given engine's dynamic state is **characteristic of** usage of crankshaft position sensor(14) and camshaft position sensor(15), or crankshaft position sensor (15) and original basic diesel fuel injectors (12a, 12b, 12c...) steering signals, to specify crankshaft angular position in a real time, and cylinders' ignition order, with simultaneously proceeded continous monitoring of signal from at least one knocking combustion sensor (17), of which value (knk_gaz.), read in time window (okno_cyl1) formulated in crankshaft rotation angle value, accuring in given cylinder's combustion process on dual-fuel mode feeding, compared to signal level (knk_prog.) measured during monofuel feeding with base liquid fuel, formulated analogically for that cylinder, facilitates precise detection of increased engine noisiness, as a effect of knocking combustion type, being a result of maximum gas dose contravention for given cylinder momentary conditions of operation, in result of which, proceeding as per the invention, adaptive correction of given alternative gaseous fuel dose for given cylinder's each work cycle separately is being realised.

9. Realization of the manner claimed in point 8, of adaptive, additive percentage regulating alternative fuel charge contribution, aiming at maximization of alternative gaseous fuel charge in both fuels total charge for given work cycle of given cylinder, **characteristic of** adding a corrective dose to predefined and stored in electronic controller's memory (2) alternative fuel charge destined to a given dynamic state of engine, in a given cylinder for a given work cycle, where maximum amount of corrective additive dose is limited with appearing of detonation type combustion in that cylinder, and basic diesel fuel charge is being reduced appropriate to increasing alternative gaseous fuel dose to keep both fuels total charge overall energetic value, and corrective charge amount is being stored in electronic controller (2), which facilitates saving at least one of its values, or various values for different dynamic states of engine, expressed as function of two variables table - engine load and rotational speed.

10. Realization of the manner claimed in point 8, of adaptive, subtractive additive percentage regulating alternative fuel charge contribution, in order to protect engine from destructive alternative fuel overdosing (in total fuel charge), **characteristic of** substracting a corrective dose from predefined and stored in electronic controller's (2) memory alternative fuel charge, destined to a given dynamic state of engine in a given cylinder, for a given work cycle, where corrective substactive charge amount stops to be increased when detonation type combustion detected as per the invention discontinues, and the amount of which, at the moment of achieving, becomes formulated as optimum for gaseous fuel charge in total charge of both fuels, and as such is being stored in electronic controller's (2) memory, structure of which facilitates saving at least one of its values, or various values for different dynamic states of engine, expressed as function of two variables table - engine load and rotational speed.
